# EUROPÄISCHE PATENTANMELDUNG

(11) **EP 0 982 839 A2**
(43) Veröffentlichungstag der Anmeldung: **01.03.2000**
(21) Anmeldenummer: 99115782.7
(22) Anmeldetag: 10.08.1999
(51) Int. Cl.: H02K 41/03

(54) **Synchronlinearmotor**

(30) Priorität: 21.08.1998 DE 19838132
(71) Anmelder: SIEMENS AKTIENGESELLSCHAFT, 80333 München (DE)
(72) Erfinder: Greubel, Klaus, Dipl.-Ing., 97616 Bad Neustadt (DE); Knauff, Axel, Dipl.-Ing., 97702 Münnerstadt (DE)

(57) **Zusammenfassung**

Synchronlinearmotor, mit mindestens einem Primärteil und mindestens einem Sekundärteil, der eine Folge von Permanentmagneten (2) aufweist, wobei die Permanentmagnete (2) auf einem magnetisch leitenden Trägermaterial (3) angebracht sind, das auf einem magnetisch leitenden Maschinenbett (6) anordenbar ist.

## Beschreibung

Die Erfindung betrifft einen Synchronlinearmotor und dessen Herstellverfahren.

Bei Synchronlinearmotoren, die einen Sekundärteil aufweisen, der aus einer langgestreckten amagnetischen Trägerplatte besteht, auf der jeweils zueinander angeordnete Permanentmagnete festgeklebt sind, besteht das Problem, daß sich die in amagnetischer Umgebung anzuordnenden Permanentmagnete während des Klebevorgangs infolge der Einrückung der gegenseitigen magnetischen Kräfte fortbewegen und sich nicht auf den vorgesehenen Positionen fixieren lassen.

Zur Vermeidung dieser Nachteile werden gemäß der DE 195 03 511 A1 die Permanentmagnete eines dort beschriebenen Synchronlinearmotors in einem Raster von Distanzelementen angeordnet, so daß eine Beeinflussung während der Montage auszuschließen ist.

Aus der EP 0 784 371 A1 ist ein Linearmotor bekannt, dessen Permanentmagnete auf einen Joch angeordnet sind, wobei die Permanentmagnete durch eine amagnetische Schicht in ihrer Lage fixiert sind. Nachteilig dabei ist, daß die Herstellung eines derartigen Linearmotors umständlich ist, als auch die Höhe eines derartigen Sekundärteils für gewisse Anwendungen nicht geeignet ist.

Aus der US 5 130 583 ist ebenfalls ein Linearmotor bekannt, dessen Permanentmagnete auf einem Joch angeordnet wird, das sich wiederum auf einer ortsfesten Grundplatte befindet. Nachteilig dabei ist ebenfalls das erhöhte Bauvolumen und die Art der Befestigung der Permanentmagnete auf der Grundplatte.

Nachteilig bei diesen Distanzelementen ist der zusätzliche Materialaufwand, und die zusätzliche Befestigung dieser Distanzelemente in oder an der Trägerplatte.

Der Erfindung liegt daher die Aufgabe zugrunde, einen Synchronlinearmotor mit geringem Montageaufwand, vergleichsweise geringem Eigengewicht zu schaffen, der eine vergleichsweise hohe Lagepräzision der am Sekundärteil zu befestigenden Permanentmagnete aufweist.

Diese Aufgabe wird erfindungsgemäß durch ein Synchronlinearmotor gelöst mit: mindestens einem Primärteil und mindestens einem Sekundärteil, der eine Folge von Permanentmagneten aufweist, wobei die Permanentmagnete auf einem magnetisch leitenden Trägermaterial angebracht sind, das auf einem magnetisch leitenden Maschinenbett anordenbar ist.

Ein derartiger Synchronlinearmotor wird durch ein Verfahren hergestellt, das folgende Schritte beinhaltet:
- nicht aufmagnetisierte Permanentmagnete werden auf einem vergleichsweise dünnen magnetisch leitenden Trägermaterial angebracht,
- diese Anordnung wird mit einer amagnetischen Abdeckung versehen,
- anschließend werden die Magnete aufmagnetisiert und als Gesamtgebilde auf einem magnetisch leitenden, den magnetischen Rückschluß bildenden Maschinenbett angebracht.

Die Permanentmagnete, das Trägermaterial und die amagnetische Abdeckung bilden eine geschlossene Anordnung, die die von außen eingeleiteten kräfte aufnimmt. Die amagnetische Abdeckung, die verbunden mit dem Trägermaterial zur Erhöhung der Steifigkeit dieser Anordnung führt, kann vorzugsweise auch nur eine Montagehilfe darstellen, um so eine weitere Gewichtsersparnis des Synchronlinearmotors zu erreichen. Der magnetische Rückschluß wird im wesentlichen nicht mehr von einer am Sekundärteil befindlichen magnetisch leitenden Platte, sondern vom Maschinenbett selbst übernommen, sodaß eine erhebliche Gewichtsersparnis eintritt. Das Trägermaterial ist magnetisch gesättigt, so daß die Anordnung 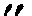 Trägermaterial, Permanentmagnete, amagnetische Abdeckung" am Maschinenbett haftet.

Eine Befestigung der Anordnung ist dabei nicht unbedingt notwendig; die Magnetkräfte, die versuchen die Permanentmagnete vom Maschinenbett abzuheben, stehen im Kräftegleichgewicht zu den Magnetkräften, die versuchen die Permanentmagnete auf dem Maschinenbett festzuhalten. Da die abhebenden Magnetkräfte aufgrund des Luftspaltes des Synchronlinearmotors immer kleiner sind, als die anziehenden Magnetkräfte, sind keine Befestigungen in dieser Richtung notwendig.

Abhängig von der Größe der Anordnung stehen unterschiedliche Möglichkeiten zur Verfügung, die Längskräfte, vorzugsweise durch Reibkräfte in das Maschinenbett zu übertragen. Zusätzlich sind sämtliche form- und kraftschlüssigen Verbindungsarten zwischen der Anordnung und dem Maschinenbett einsetzbar.

Die angeordneten Permanentmagnete müssen nicht notwendigerweise parallel ausgerichtete Zwischenräume, vorzugsweise Spalte, aufweisen, vielmehr sind auch schräg angeordnete oder Permanentmagnete mit konischen Zwishenräumen möglich um so u.a. in den Endbereichen des Primärteils eines Synchronlinearmotors einen Kraftwelligkeitsausgleich zu erhalten.

Ebenso sind verschieden geometrisch gestaltete Permanentmagnete einsetzbar.

Durch nicht aufmagnetisierte Permanentmagnete läßt sich die Herstellung eines Synchronlinearmotors wesentlich vereinfachen, da sich die Permanentmagnete gegenseitig nicht an- beziehungsweise abstoßen und so die Montage durch zusätzliche Arbeitsgänge und Teile erschwert wird.

Vorzugsweise werden die Zwischenräume mit einem flüssigen, aushärtenden amagnetischen Material ausgefüllt. Dadurch tritt eine weitere Erhöhung der Steifigkeit der Anordnung ein. Dabei sind in einer weiteren vorzugsweisen Ausgestaltung auch die Zwischenräume zwischen Permanentmagneten und amagnetischer Abdeckung damit ausfüllbar.

Bei einer Verwendung der amagnetischen Abdeckung als Montagehilfe, wird diese nach dem Aushärtungsprozess entfernt.

Die anschließende Aufmagnetisierung der Permanentmagnete belaßt die Permanentmagnete an ihren ursprünglich zugewiesenen Plätzen.

Die Gesamtkonstruktion ist wesentlich leichter als vergleichbare aus dem Stand der Technik bekannte Synchronlinearmotoren.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert. Dabei zeigen:

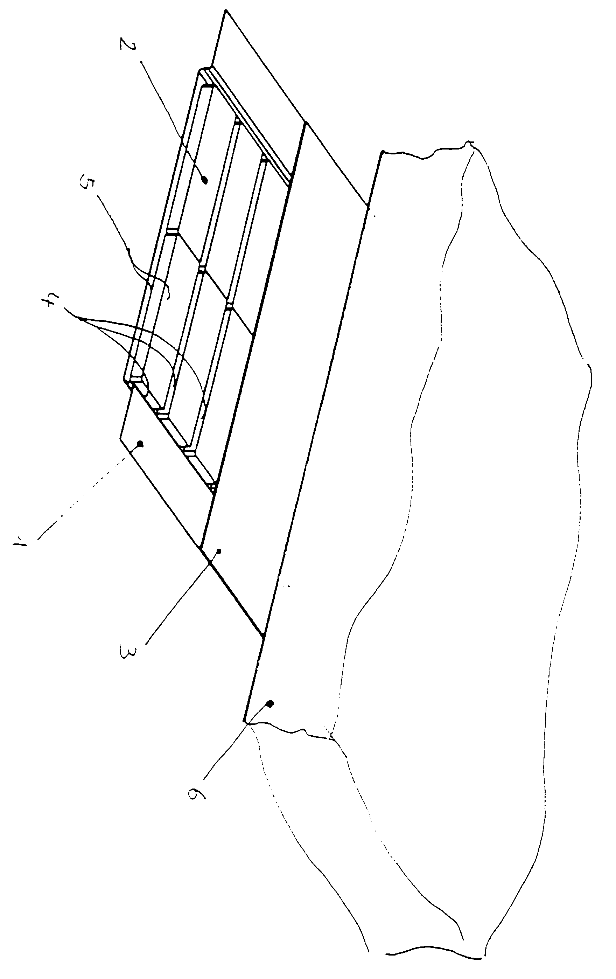

- FIG 1: den prinzipiellen Aufbau eines Sekundärteils eines Synchronlinearmotors.

FIG 1 zeigt einen Sekundärteil eines Synchronlinearmotors mit vorzugsweise quaderförmigen Permanentmagneten 2, die in Zweierreihen mit identischen Zwischenräumen 4 auf einem Trägermaterial 3 angeordnet sind. Dieses Trägermaterial 3 ist aus magnetisch leitendem Material, z.B. Eisen, und so dünn, daß sich eine magnetische Sättigung einstellt. Die Permanentmagnete 2 werden vorzugsweise mit einem Kleber 5 auf diesem dünnen magnetisch leitendenden Trägermaterial 3 befestigt. Dieses mit Permanentmagneten 2 bestückte Trägermaterial 3 weist eine dünne amagnetische Abdeckung 1, z.B. Edelstahl, auf. Diese amagnetische Abdeckung 1 ist mit den Permanentmagenten 2 und/oder dem Trägermaterial 3 durch Kleber 5 oder anderen allgemein üblichen Verbindungsarten verbunden.

Die Zwischenräume 4 sind vorzugsweise mit flüssigem aushärtenden amagnetischen Material ausgefüllt. Nach dem Aushärtungsprozess verbleibt die amagnetische Abdeckung 1 vorzugsweise aus Stabilitätsgründen auf dem mit Permanentmagneten 2 versehenen Trägermaterial 3. Nach der Aushärtung ist eine Bewegung der Permanentmagnete 2 zueinander und auf dem Trägermaterial 3 nicht mehr möglich und die Permanentmagnete 2 können aufmagnetisiert werden.

Diese Anordnung wird anschließend auf das magnetisch leitende Maschinenbett 6 gebracht. Das Trägermaterial 3 und die amagnetische Abdeckung 1 der Permanentmagnete 2 bilden ein geschlossenes Profil, das die von außen eingeleiteten Kräfte aufnimmt und das Eindringen von Feuchtigkeit oder Schmutz verhindert. Außerdem wird durch eine Löt- oder Schweißverbindung der amagnetischen Abdeckung 1 mit dem Trägermaterial 3 eine äußerst steife Anordnung gebildet, um vorhandene Zugkräfte aufzunehmen.

Das Trägermaterial 3 ist magnetisch gesättigt, so daß die Gesamtanordnung 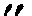 Trägermaterial 3 mit Permanentmagneten 2 und amagnetischer Abdeckung 1" am Maschinenbett 6 haftet. Eine Befestigung der Gesamtanordnung am Maschinenbett 6 ist nicht unbedingt erforderlich, kann aber mit allgemein üblichen Mittel des Form-, Reib- oder Stoffschlußes vorgenommen werden. Die Magnetkräfte, die versuchen die Permanentmagnete 2 vom Maschinenbett 6 abzuheben, stehen im Kräftegleichgewicht mit den Magnetkräften, die versuchen die Permanentmagnete 2 auf dem Maschinenbett 6 zu halten. Da die abhebenden Magnetkräfte aufgrund des immer vorhandenen Luftspaltes des Synchronlinearmotors durchweg kleiner sind, als die anziehenden Magnetkräfte, sind keine Befestigungen zwischen Maschinenbett 6 und der Gesamtanordnung notwendig.

Die Gesamtanordnung weist eine erhebliche Gewichtsreduktion gegenüber herkömmlichen Synchronllinearmotoren auf.

Dieses Verfahren kann grundsätzlich auch für rotatorische Motoren, z.B. Synchronmotoren, eingesetzt werden.

## Patentansprüche

1. Synchronlinearmotor, mit mindestens einem Primärteil und mindestens einem Sekundärteil, der eine Folge von Permanentmagneten (2) aufweist, wobei die Permanentmagnete (2) auf einem dünnen magnetisch leitenden Trägermaterial (3) angebracht sind, das auf einem magnetisch leitenden Maschinenbett (6) anordenbar ist, wobei die Permanentmagnete (2) auf dem Trägermaterial (3) fixiert sind und wobei sich im Betrieb des Synchronlinearmotors eine magnetische Sättigung des Trägermaterials (3) einstellt.

2. Synchronlinearmotor nach Anspruch 1, **dadurch gekennzeichnet,** daß die Permanentmagnete (2) in Richtung des Luftspaltes zwischen Primärteil und Sedundärteil eine amagnetische Abdeckung (1) aufweisen.

3. Synchronlinearmotor nach Anspruch 1 oder 2, **dadurch gekennzeichnet,** daß die Permanentmagnete (2) auf dem Trägermaterial (3) fixiert sind.

4. Synchronlinearmotor nach einem der vorhergehenden Ansprüche, **dadurch gekennzeichnet,** daß die Zwischenräume (4) um die Permanentmagnete (2) mit flüssigen aushärtenden amagnetischen Material ausfüllbar sind.

5. Verfahren zur Herstellung eines Synchronlinearmotors nach Anspruch 1, **gekennzeichnet** durch folgende Schritte:
- nicht aufmagnetisierte Permanentmagnete (2) werden auf einen vergleichsweise dünnen magnetisch leitenden Trägermaterial (3) angebracht,
- diese Anordnung wird mit einer amagnetischen Abdeckung (1) versehen,
- anschließend werden die Permanentmagnete (2) aufmagnetisiert und die Anordnung(Permanentmagnete (2) auf Trägermaterial (3) mit Abdeckung (1)) auf einem magnetisch leitenden Maschinenbett (6) angebracht.

6. Verfahren nach Anspruch 5, **dadurch gekennzeichnet,** daß die amagnetische Abdeckung (1) der Anordnung mit den Permanentmagneten (2) und/oder dem Trägermaterial (3) verbunden werden.

7. Verfahren nach Anspruch 5 oder 6, **dadurch gekennzeichnet,** daß die vorhandenen Zwischenräume (4) um die Permanentmagnete (2) mit flüssigem, aushärtendem amagnetischen Material ausgefüllt werden.
